# FASCICULE DE BREVET EUROPEEN

(11) **EP 3 368 950 B1**
(45) Date de publication et mention de la délivrance du brevet: **31.07.2019**
(21) Numéro de dépôt: 16770274.5
(22) Date de dépôt: 22.09.2016
(51) Int. Cl.: G04F 3/02, F03G 1/02, G04F 7/08

(54) **CHRONOGRAPHE COMPTE À REBOURS**
CHRONOGRAPH MIT RÜCKWÄRTSZÄHLER
CHRONOGRAPH WITH COUNTDOWN TIMER

(30) Priorité: 27.10.2015 CH 15662015
(43) Date de publication de la demande: 05.09.2018
(73) Titulaire: Manufacture et fabrique de montres et chronomètres, Ulysse Nardin Le Locle S.A., 2400 Le Locle (CH)
(72) Inventeur: PELLATON, Loïc, 2052 Fontainemelon (CH); LEIMGRUBER, Boris, 2333 La Cibourg (CH); HUMAIR, Lucas, 2022 Bevaix (CH)
(74) Mandataire: e-Patent SA
(86) Numéro de dépôt international: PCT/EP2016/072589
(87) Numéro de publication internationale: WO 2017/071887

(56) Documents cités:
- EP-A1- 1 777 598
- EP-A2- 2 239 638
- WO-A1-02/077725
- CH-A- 165 556
- CH-A2- 706 203
- CH-B5- 566 052
- US-A1- 2004 233 788

## Description

### Domaine technique

La présente invention se rapporte au domaine de l'horlogerie. Elle concerne, plus particulièrement, un mouvement horloger comprenant un mécanisme de chronographe avec une fonctionnalité de compte à rebours.

### Etat de la technique

Le document WO2011/160970 divulgue un mouvement d'horlogerie du genre indiqué ci-dessus. Dans ce mouvement, une indication des minutes du compte à rebours est fournie par un système à disques avec un disque pour le chiffre des dizaines et un disque pour le chiffre des unités. L'utilisateur peut programmer le nombre de minutes à décompter, et, lorsque le mécanisme est démarré en mode de compte à rebours, l'aiguille de secondes de chronographe est entraînée en sens inverse. À chaque tour de l'aiguille de secondes de chronographe, l'affichage des minutes à décompter est décrémenté au moyen d'un système similaire à un échappement sous l'effet d'un barillet spécifique.

Au terme du décompte, le système bascule automatiquement en mode de chronographe conventionnel, au moyen d'un système de commutation à bascule et à pignon oscillant.

Ce mouvement est complexe et nécessite le barillet spécifique susmentionné pour l'entraînement de l'affichage des minutes du compte à rebours, ce barillet spécifique prenant de la place dans le mouvement.

Le document WO02/077725 propose une pièce d'horlogerie dotée d'un mécanisme de chronographe à-même de fonctionner dans les deux sens et donc susceptible d'être utilisé comme compte-à-rebours. Une roue inverseuse est montée sur une bascule et peut faire partie ou non de la chaîne cinématique menant l'aiguille de chronographe. La position de la bascule de la roue inverseuse est déterminée par une roue à colonne, commandée manuellement. Il est donc nécessaire à l'utilisateur de démarrer manuellement le chronographe à la fin du compte à rebours. Un agencement similaire est également dévoilé par le document CH 165 556.

Le but de l'invention est par conséquent de proposer une pièce d'horlogerie modulaire dans laquelle les défauts susmentionnés sont au moins partiellement surmontés.

### Divulgation de l'invention

De façon plus précise, l'invention concerne un mouvement horloger comprenant une source d'énergie et une base de temps, tel qu'un balancier-spiral, liée cinématiquement à ladite source d'énergie par l'intermédiaire d'un rouage de finissage, et un mécanisme de chronographe en liaison cinématique sélective avec ledit rouage de finissage par l'intermédiaire d'un mécanisme d'embrayage commandé par un premier organe de commande.

Le mécanisme de chronographe comprend un mobile de secondes de chronographe susceptible d'être en liaison cinématique avec ledit mécanisme d'embrayage et associé à un organe d'affichage de seconde de chronographe, un mobile de compte à rebours destiné à être entraîné par le mobile de secondes de chronographe et en liaison cinématique avec un organe d'affichage de compte à rebours, et un mécanisme inverseur comprenant une première entrée agencé pour être entraînée par le rouage de finissage et une sortie agencée pour entrainer le mobile de secondes de chronographe en rotation. Le mécanisme inverseur est configuré de telle sorte qu'il présente un premier état dans lequel il est agencé pour entraîner le mobile de secondes de chronographe dans un sens normal, et un second état dans lequel il est agencé pour entraîner le mobile de secondes de chronographe dans un sens inverse. L'état du mécanisme inverseur est commandé automatiquement en fonction de la position angulaire du mobile compte à rebours, de telle sorte que le mécanisme inverseur est dans son premier état lorsque le mobile de compte à rebours se trouve dans une position angulaire correspondant à une indication de compte à rebours de zéro, et le mécanisme se trouve donc en mode de chronographe conventionnel, et que le mécanisme inverseur est dans son second état lorsque le mobile de compte à rebours se trouve dans une autre position angulaire, et est donc en mode de compte à rebours, le mobile de secondes de chronographe étant donc destiné à tourner en sens inverse.

Le mécanisme comprend en outre un mécanisme de commande de compte à rebours agencé pour positionner angulairement le mobile compte à rebours suite à des actions d'un utilisateur sur un deuxième organe de commande, afin de déterminer la période à décompter en mode de compte à rebours.

Puisque l'état du mécanisme inverseur est commandé en fonction de la position angulaire du mobile de compte à rebours, le mécanisme bascule automatiquement du mode de compte à rebours au mode de chronographe conventionnel lorsque l'indication de compte à rebours atteint zéro. Tous les éléments étant entraînés par le rouage de finissage, aucune source d'énergie supplémentaire n'est nécessaire, ce qui rend le mécanisme plus compact.

Avantageusement, le mobile de compte à rebours comprend une came de compte à rebours agencée pour déterminer l'état du mécanisme inverseur.

Avantageusement, le mobile de compte à rebours comprend en outre une étoile présentant un nombre de dents supérieur au nombre de minutes maximum à décompter, par exemple 12 dents pour 11 minutes à décompter au maximum, l'étoile étant solidaire en rotation avec la came de compte à rebours et positionnée par un sautoir.

Avantageusement, le mécanisme comprend en outre un palpeur destiné à rentrer en contact avec la came de compte à rebours et étant en liaison cinématique avec le mécanisme inverseur afin de déterminer son état.

Avantageusement, le mécanisme comprend en outre un crochet pivotant, qui est agencé pour maintenir le palpeur hors de contact de la came de compte à rebours lorsque ce n'est pas nécessaire ou souhaité, par exemple lorsque le mécanisme de chronographe est au repos.

Avantageusement, le mécanisme comprend en outre un bloqueur agencé pour bloquer le deuxième organe de commande lorsque le mécanisme de chronographe est en marche ou est à l'arrêt et n'a pas été remis à zéro, pour éviter que le mobile de compte à rebours puisse être pivoté de manière intempestive. Le bloqueur peut être solidaire en rotation du crochet, ce qui synchronise donc le fonctionnement de ces deux éléments.

Avantageusement, le mécanisme comprend un système de marche-arrêt agencé pour embrayer et débrayer le mécanisme d'embrayage et pour dégager le cliquet de la denture de l'étoile lorsque le mécanisme de chronographe est en marche, afin que le mobile de compte à rebours puisse tourner librement par rapport au cliquet lorsque le mécanisme de chronographe fonctionne en mode de compte à rebours.

Avantageusement, le système de marche-arrêt est également agencé pour pivoter le crochet afin de libérer le palpeur lorsque le mécanisme de chronographe est en fonctionnement, pour qu'il puisse rentrer en contact avec la came de compte à rebours.

Avantageusement, un système de bascules relie un troisième organe de commande, de remise à zéro, au palpeur afin de pivoter ce dernier hors de contact de la came de compte à rebours lors d'une pression sur le troisième organe de commande.

Avantageusement, le palpeur et le crochet sont agencés de telle sorte que, lors de ladite pression sur le troisième organe de commande, un ressort coopérant avec le crochet le fait pivoter pour qu'il raccroche le palpeur à nouveau lorsque ladite pression est relâchée.

Avantageusement, le mécanisme inverseur comprend un engrenage planétaire comportant ladite première entrée, ladite sortie et une seconde entrée agencée pour coopérer avec ledit mobile de compte à rebours. Un mécanisme inverseur très compact est ainsi proposé, qui n'occupe pas beaucoup de surface dans le plan du mouvement, contrairement à un inverseur à pignons oscillants.

Avantageusement, ladite première entrée est un pignon solaire destiné à être entraîné en rotation par le rouage de finissage, ladite deuxième entrée est un porte-satellite portant un mobile satellite qui engrène à la fois avec le pignon solaire et un mobile de sortie, le porte-satellite formant ladite deuxième entrée et étant agencé pour être freiné par un frein en liaison cinématique avec le palpeur afin de déterminer ledit état du mécanisme inverseur. Par ailleurs, la seconde entrée est reliée à la sortie par l'intermédiaire d'un accouplement à couple limité tel qu'un sautoir ou une friction, ou par l'intermédiaire d'un engrenage unidirectionnel.

Avantageusement, le mobile de compte à rebours est en liaison cinématique avec le mobile de secondes de chronographe par l'intermédiaire d'un entrainement à friction pour éviter que le mouvement soit bloqué si le mobile de compte à rebours est bloqué.

Avantageusement, le mécanisme comporte en outre un dispositif d'affichage de minutes et d'heures de chronographe, ce dernier étant agencé pour être bloqué par un frein commandé par le palpeur, afin d'éviter que le dispositif d'affichage de minutes et d'heures de chronographe opère lorsque le mécanisme se trouve en mode de compte à rebours.

### Brève description des dessins

D'autres détails de l'invention apparaîtront plus clairement à la lecture de la description qui suit, faite en référence au dessin annexé dans lequel :
- Fig. 1 est une vue d'un cadran d'une pièce d'horlogerie comprenant un mouvement horloger selon l'invention ;
- Fig. 2 est une vue d'un schéma de fonctionnement d'un mouvement horloger selon l'invention, le mécanisme de chronographe étant au repos ;
- Fig. 3 est une vue côté fond d'un mode de réalisation d'un mouvement horloger selon l'invention ;
- Fig. 4 est une vue éclatée du mécanisme inverseur dudit mouvement ;
- Fig. 4a est deux vues perspectives d'une variante du mécanisme inverseur ;
- Fig. 4b est une vue éclatée du mécanisme inverseur de la figure 4a ;
- Fig. 5 est une vue dudit mécanisme inverseur et de son frein ;
- Fig. 6 à 8 sont des vues côté cadran dudit mouvement, plusieurs éléments ayant été supprimés de chaque vue ;
- Fig. 9 est une vue éclatée du mobile de compte à rebours dudit mouvement ;
- Fig. 10 est une vue côté cadran dudit mouvement en mode de compte à rebours, en fonctionnement ;
- Fig. 11a à 13b sont des vues du système marche-arrêt et les bascules associées au troisième organe de commande de remise à zéro ;
- Fig. 14 est une vue semblable à la fig. 10, en mode de chronographe en fonctionnement ;
- Fig. 15 est une vue semblable à la fig. 10, en mode de chronographe à l'arrêt ;
- Fig. 16 est une vue semblable à la fig. 10, en mode de chronographe, l'organe de commande de remise à zéro étant enfoncé ; et
- Fig. 17 est une vue semblable à la fig. 16, en mode de chronographe, l'organe de commande de remise à zéro ayant été relâché.

### Modes de réalisation de l'invention

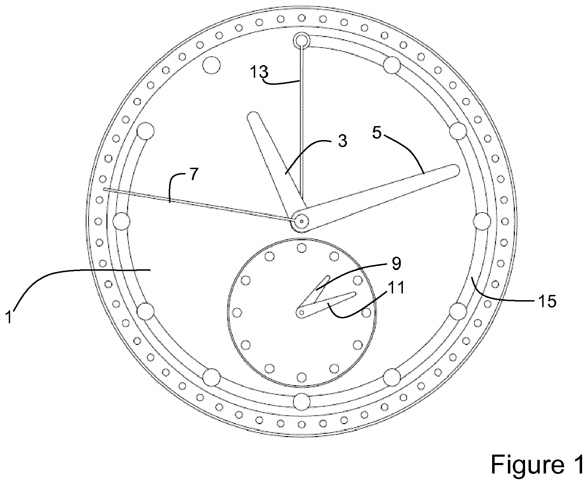

La figure 1 illustre le cadran 1 et l'aiguillage d'une pièce d'horlogerie comportant un mécanisme de chronographe d'un mouvement horloger selon l'invention, dont le fonctionnement sera décrit par la suite.

De manière conventionnelle, la pièce d'horlogerie comprend des aiguilles des heures 3 et des minutes 5 de l'heure, une aiguille de secondes de chronographe 7 au centre, et un aiguillage décentré indiquant les minutes et les heures de chronographe au moyen d'une aiguille des heures de chronographe 9 ainsi qu'une aiguille des minutes de chronographe 11. Si l'utilisateur ne d'intéresse pas aux heures chronométrées, l'aiguille correspondante 9 peut être supprimée.

Par ailleurs, une aiguille de compte à rebours 13 est prévu, coaxiale à l'aiguille des secondes de chronographe 7.

Les aiguilles susmentionnées forment des organes d'affichage, et peuvent être agencées selon d'autres configurations (par exemple centrées ou décentrées), et il est également possible de prévoir d'autres genres d'organes d'affichage tels que des disques portant un index ou des chiffres pour l'un ou plusieurs des organes d'affichage. Afin de ne pas alourdir la description qui suit, référence est faite à des « aiguilles », mais tout autre genre d'organes d'affichage est également implicitement proposé.

Lorsque l'aiguille de compte à rebours 13 se trouve dans la position illustrée sur la figure 1, c'est-à-dire se dirigeant en direction 12-heures et ainsi indiquant « zéro », le mécanisme de chronographe fonctionne conventionnellement suite à des pressions sur un organe de commande de marche/arrêt et sur un organe de commande de remise à zéro (non illustrés sur la figure 1), qui ne doit pas être décrit plus en détails ici.

L'aiguille de compte à rebours 13 peut être amenée manuellement dans une autre position angulaire lorsque le mécanisme de chronographe est à l'arrêt et la remise à zéro a été effectuée, par l'intermédiaire d'un organe de commande prévu dans ce but afin de déterminer la période à décompter. Dans la variante illustrée, l'aiguille de compte à rebours 13 peut être déplacée manuellement par pas d'un douzième de tour, afin de se diriger vers l'un des douze index se situant conventionnellement autour du cadran 1. Pour l'aiguille de compte à rebours 13, chaque douzième de tour représente une minute, mais d'autres divisions de temps sont possibles, par exemple une heure pour un tour complet de l'aiguille 13.

Si, par exemple, l'utilisateur amène l'aiguille de compte à rebours 13 en position 10-heures, le mécanisme de chronographe se trouvera en mode de compte à rebours, et décomptera 10 minutes lorsque le mécanisme de chronographe est démarré. Ce faisant, l'aiguille de secondes de chronographe 7 tournera dans le sens antihoraire, et l'aiguille de compte à rebours 13 sera également entraînée dans le sens antihoraire à raison d'un douzième de tour pour chaque tour de l'aiguille de secondes de chronographe 7. Lors de cette phase de fonctionnement, les aiguilles des heures 9 et des minutes 11 de chronographe seront bloquées en indiquant zéro.

Lorsque l'aiguille de compte à rebours 13 et l'aiguille de secondes de chronographe 7 indiquent zéro, et si l'utilisateur n'arrête pas le mécanisme de chronographe, le mécanisme de chronographe basculera automatiquement en mode de chronographe conventionnel, les aiguilles des heures 9 et des minutes 11 de chronographe seront libérées, et l'aiguille de secondes de chronographe 7 commence à tourner dans le sens horaire.

Cette fonctionnalité est particulièrement intéressante pour des régates de voile, où un démarrage automatique de la fonction chronographe conventionnelle après le décompte des minutes avant le départ de la course est très utile pour l'utilisateur. En effet, l'utilisateur n'a qu'à programmer le nombre de minutes (typiquement 10 ou 6 minutes) entre le signal de préparation et le départ de la course, et à démarrer le mécanisme au moment du premier signal.

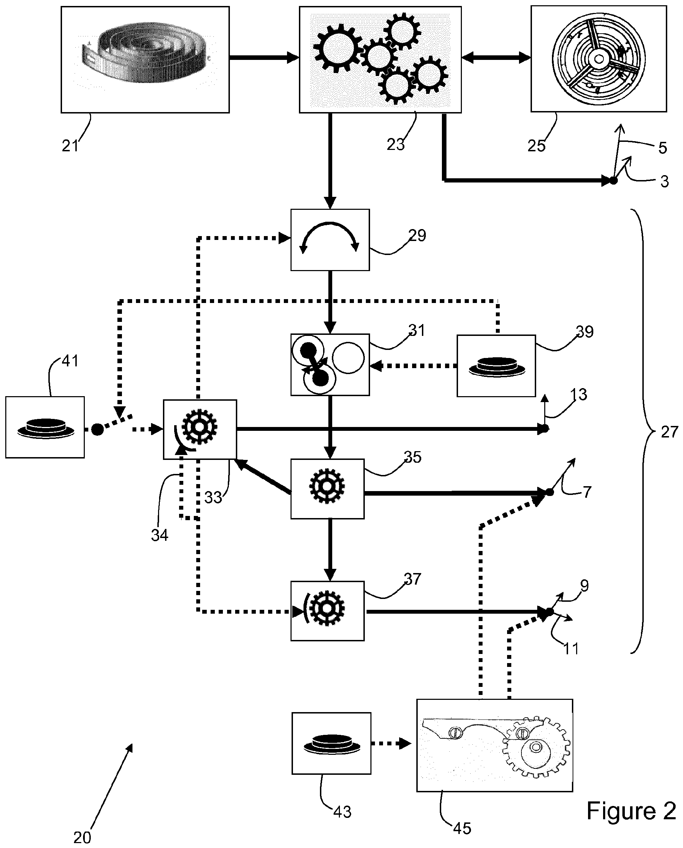

La figure 2 illustre schématiquement une cinématique d'un mouvement horloger 20 qui permet d'obtenir le fonctionnement décrit ci-dessus. Dans cette figure, les flèches pleines représentent une transmission de couple, et les flèches pointillées représentent une transmission de commandes partout moyen approprié, typiquement des leviers, des cames, des rouages, etc. Par ailleurs, des arcs de cercle positionnés à côté de mobiles indiquent des freins, systèmes de blocage ou similaires associés ces mobiles.

Le mouvement 20 comporte, de manière conventionnelle, une source d'énergie 21 telle qu'un ressort moteur stocké dans un barillet, qui est en liaison cinématique avec une base de temps 25, tel qu'un oscillateur balancier-spiral par l'intermédiaire d'un rouage de finissage 23. Le rouage de finissage 23 est en liaison cinématique avec un mécanisme de chronographe 27, qui a pour prise de force tout mobile convenable du rouage de finissage, par exemple le mobile de secondes.

En aval de cette prise de force se trouve un mécanisme inverseur 29, qui sert à fournir une rotation dans un sens ou dans l'autre à un mobile d'un mécanisme d'embrayage 31, qui est de forme conventionnelle, et qui peut être un embrayage agissant parallèlement au plan du mouvement, ou perpendiculairement audit plan, ou bien tout autre genre d'embrayage. Lorsque le mécanisme inverseur 29 entraîne le mécanisme d'embrayage 31 dans un sens, il se trouve dans son premier état, il se trouve dans son deuxième état lorsqu'il entraîne le mécanisme d'embrayage 31 dans l'autre sens.

Le mécanisme inverseur 29 comprend une première entrée, qui reçoit de l'énergie fournie par le rouage de finissage 23, et une sortie, qui la fournit à l'embrayage 31. Le sens de rotation est commandé par un mobile de compte à rebours 33 par l'intermédiaire d'une seconde entrée de commande du mécanisme inverseur 29, comme on le comprendra plus clairement par la suite.

Au vu du fait que les sens de rotation dépendent du nombre de roues dans la chaîne cinématique, on désigne par la suite pour les mobiles qui présentent deux sens de rotation, notamment un « sens de rotation normal », qui correspond au sens de rotation du mobile en question lorsque le mécanisme de chronographe fonctionne en mode conventionnel, et un « sens de rotation inverse » correspondant au sens de rotation d'un mobile particulier lorsque le mécanisme fonctionne en mode de compte à rebours.

L'embrayage 31 est en liaison cinématique avec un mobile de secondes de chronographe 35 afin d'entraîner en rotation l'aiguille de secondes de chronographe 7, et est commandé de manière conventionnelle par un premier organe de commande 39, qui peut être par exemple un poussoir, afin de démarrer et d'arrêter le mécanisme de chronographe. Typiquement, le mobile de secondes de chronographe 35 effectue un tour par minute et l'aiguille 7 est solidaire en rotation avec le mobile de secondes de chronographe 35, mais il est également possible qu'il tourne avec une autre vitesse de rotation, par exemple en 30 secondes, 2 minutes, 4 minutes etc., et il est possible de prévoir une ou plusieurs roues intermédiaires entre le mobile de secondes de chronographe 35 et l'aiguille correspondante 7, qui peut tourner avec une vitesse angulaire identique à ou différente de celle du mobile 35.

Le mobile de secondes de chronographe 35 entraîne également d'une part un dispositif d'affichage de minutes et d'heures de chronographe 37, qui entraîne les aiguilles de minutes 11 et d'heures 9 de chronographe de manière conventionnelle, par exemple par l'intermédiaire d'une roue à friction. Il va sans dire que d'autres divisions de temps peuvent être choisies à volonté, et qu'on pourrait n'avoir qu'une seule aiguille 9, 11, par exemple celle des minutes.

Le mobile de secondes de chronographe 35 entraîne d'autre part le mobile de compte à rebours 33 en rotation. Ce dernier est agencé afin de mettre le mécanisme inverseur 29 dans un premier état afin d'entraîner le mécanisme d'embrayage 31 dans le sens de rotation normal lorsque le mobile de compte à rebours 33 se trouve dans sa position angulaire correspondant à l'indication « zéro » par l'aiguille de compte à rebours 13 qu'il entraine. Dans cette orientation, lorsque le mécanisme est en fonctionnement, ledit mobile 33 est bloqué automatiquement et ne peut plus tourner. Afin de permettre ce blocage du mobile 33 sans empêcher le mécanisme de chronographe 27 de fonctionner, le mobile 33 peut par exemple être entrainé par le mobile de secondes de chronographe par l'intermédiaire d'une roue à friction. Dans cet état, le mécanisme de chronographe se trouve dans son mode conventionnel, et les aiguilles de chronographe 7, 9, 11 sont entraînées dans le sens normal.

Par contre, lorsque ledit mobile de compte à rebours 33 se trouve dans une autre position angulaire suite à une action de l'utilisateur sur un deuxième organe de commande 41 (voir ci-dessous), le mécanisme inverseur 29 est commandé dans son second état pour entraîner le mécanisme d'embrayage 31 dans le sens de rotation inverse, et l'aiguille de secondes de chronographe 7 ainsi que le mobile de compte à rebours 33 et l'aiguille de compte à rebours 13 sont également entraînées en sens inverse.

Dans cet état, le mobile de compte à rebours 33 bloque le dispositif d'affichage de minutes et d'heures de chronographe 37 afin que les aiguilles 9 et 11 restent à zéro et ne soient pas entraînées en sens inverse. Néanmoins, cette fonctionnalité peut être supprimée si elle n'est pas nécessaire, par exemple s'il est acceptable pour l'utilisateur de remettre ces aiguilles à zéro au moment de départ de la régate.

Comme mentionné ci-dessus, afin de déterminer le nombre de minutes à décompter, un deuxième organe de commande 41 est prévu, cet organe 41 étant agencé pour positionner angulairement le mobile de compte à rebours 33 au moins lorsque le mécanisme de chronographe est à l'arrêt. Ce deuxième organe de commande 41 peut être, par exemple, un poussoir, une couronne, une lunette tournante, ou similaire. Afin d'empêcher l'opération du deuxième organe de commande 41 lorsque le mécanisme de chronographe est en fonctionnement ou arrêté sans avoir été remis à zéro, l'organe de commande 41 peut être libéré ou bloqué par le premier organe de commande 39, ou alternativement par un élément associé à l'embrayage.

Afin de remettre les diverses aiguilles de chronographe 7, 9, 11 à zéro, un système de remise à zéro 45 conventionnel est prévu, commandé par un troisième organe de commande 43.

Plusieurs variantes peuvent également être prévues sur la base de ce schéma. Par exemple, le mécanisme inverseur 29 peut se situer en aval de l'embrayage 31, ou ces deux éléments peuvent même être combinés dans un mécanisme embrayage-inverseur.

Le cycle de fonctionnement du mécanisme lors d'un compte à rebours sera maintenant décrit en référence à ce schéma, qui éclairera comment le mécanisme de chronographe 27 effectue les fonctions décrites ci-dessus. Le fonctionnement en mode de chronographe standard étant tout à fait conventionnel, il ne sera pas décrit en détails.

Le mécanisme de chronographe étant à l'arrêt et remis à zéro, l'utilisateur actionne le deuxième organe de commande 41 afin d'amener l'aiguille de compte à rebours 13 dans sa position correspondant au nombre de minutes à décompter. Ce faisant, le mobile de compte à rebours 33 est pivoté, et commande le mécanisme inverseur 29 afin d'entraîner l'embrayage 31 selon son sens de rotation inverse. Par ailleurs, le mobile de compte à rebours 33 bloque le dispositif d'affichage de minutes et d'heures de chronographe 37, typiquement en freinant le mobile de minutes de chronographe.

Lorsque l'utilisateur fait démarrer le mécanisme au moyen du premier organe de commande 39, l'embrayage 31 est embrayé, et le mobile 35 ainsi que l'aiguille 7 de secondes de chronographe sont entraînés en sens inverse. Le dispositif d'affichage de minutes et d'heures de chronographe 37 étant toujours bloqué, les aiguilles des heures et des minutes de chronographe 9, 11 demeurent immobiles.

Le mobile de compte à rebours 33 étant en liaison cinématique avec le mobile de secondes de chronographe 35, il est également entraîné en sens inverse, et l'aiguille de compte à rebours 13 tourne dans le sens antihoraire.

Lorsque l'aiguille de compte à rebours 13 et celle des secondes de chronographe 7 indiquent zéro, le mobile de compte à rebours 33 est automatiquement bloqué par un système de blocage quelconque qui bloque le mobile de compte à rebours 33 en fonction de sa position angulaire, comme indiqué schématiquement par la flèche 34, le dispositif d'affichage de minutes et d'heures de chronographe 37 est débloqué, et le mécanisme inverseur 29 est commandé pour revenir en mode d'entraînement dans le sens normal.

Par conséquent, le sens de rotation du mobile de secondes de chronographe 35 est changé, et le mécanisme de chronographe 27 bascule automatiquement en mode conventionnel, sans aucune action supplémentaire de la part de l'utilisateur.

Le mobile de compte à rebours 33 étant maintenant bloqué, l'aiguille de compte à rebours 13 reste immobile.

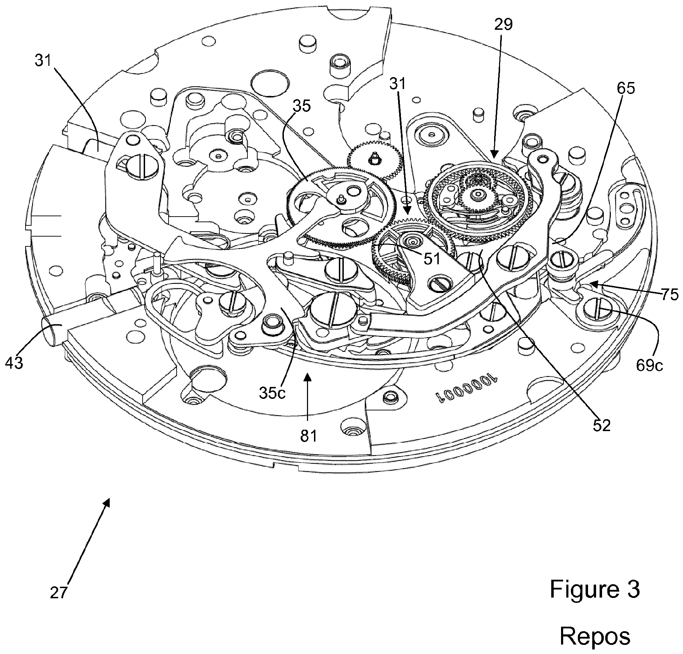

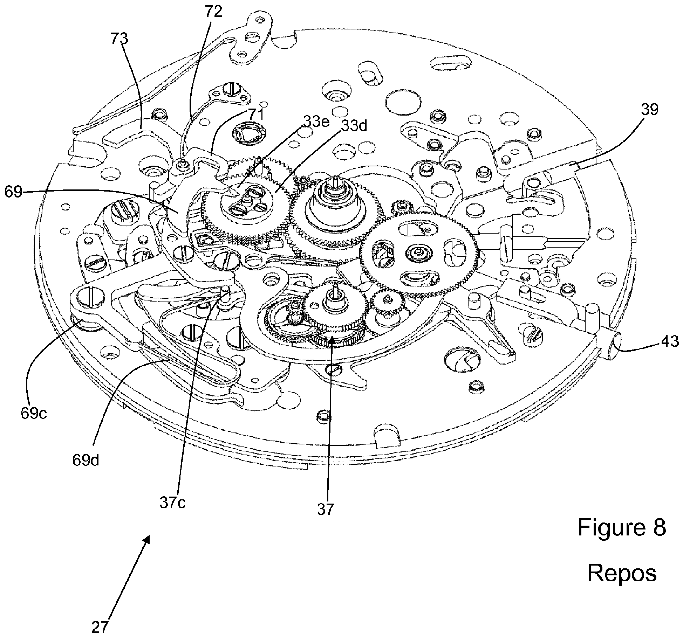

Les figures 3 à 17 illustrent un mode de réalisation concret qui met en oeuvre le schéma de la figure 2, en divers états de fonctionnement. Puisqu'il est impossible de montrer l'ensemble des composants sur un nombre raisonnable de figures, on se référera à plusieurs figures pour avoir une appréciation complète du mécanisme. Par ailleurs, plusieurs composants n'ont pas été représentés afin de ne pas alourdir les figures, et seuls les composants pertinents pour la compréhension de l'invention seront référencés sur les figures lorsqu'ils sont référencés dans le texte. Les autres composants non référencés sont conventionnels et ne doivent donc être décrits.

La figure 3 illustre un mouvement 20 selon l'invention, vu du côté fond. Le mécanisme comporte un mobile de secondes de chronographe 35 situé au centre du mécanisme 20, qui est entraîné par l'intermédiaire de l'embrayage 31, qui est de type conventionnel et comprend un mobile d'embrayage 51 qui est porté par une bascule d'embrayage 52 et engrène en permanence avec la sortie du mécanisme inverseur 29. Le mobile d'embrayage 51 est déplaçable entre une position débrayée dans laquelle il n'engrène pas avec le mobile de secondes de chronographe 35, et une position embrayée dans laquelle il entraîne le mobile de secondes de chronographe 35, sous la commande d'un système de navette 81 qui est commandé par le premier organe de commande 31 de marche-arrêt.

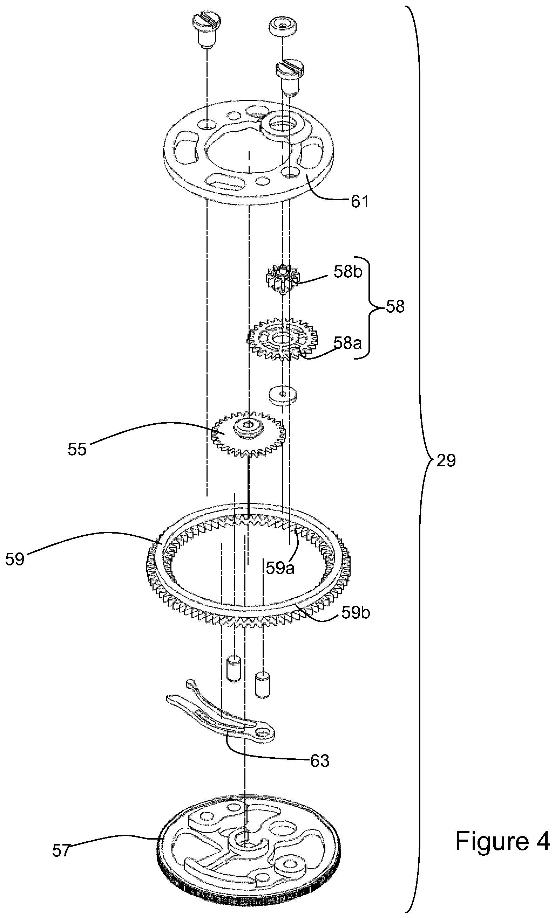

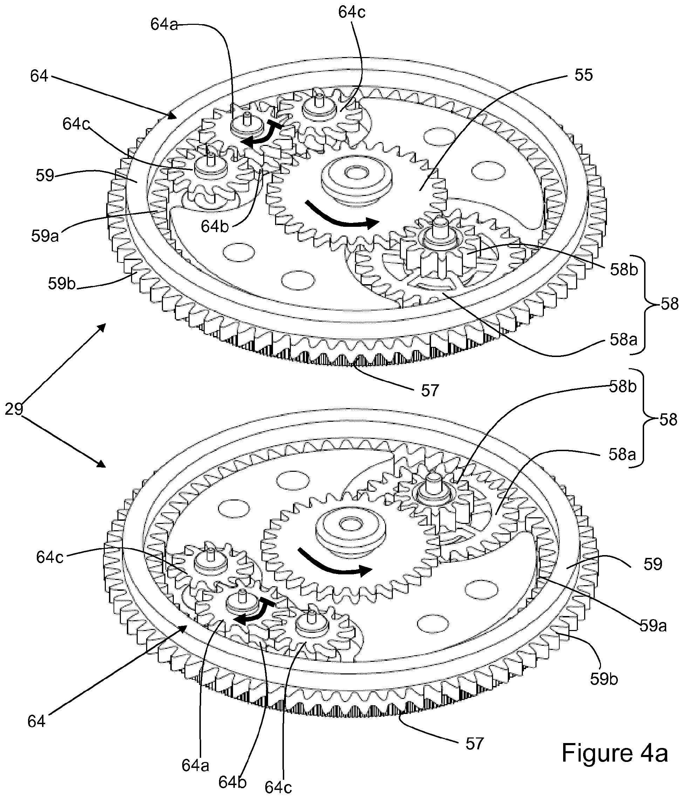

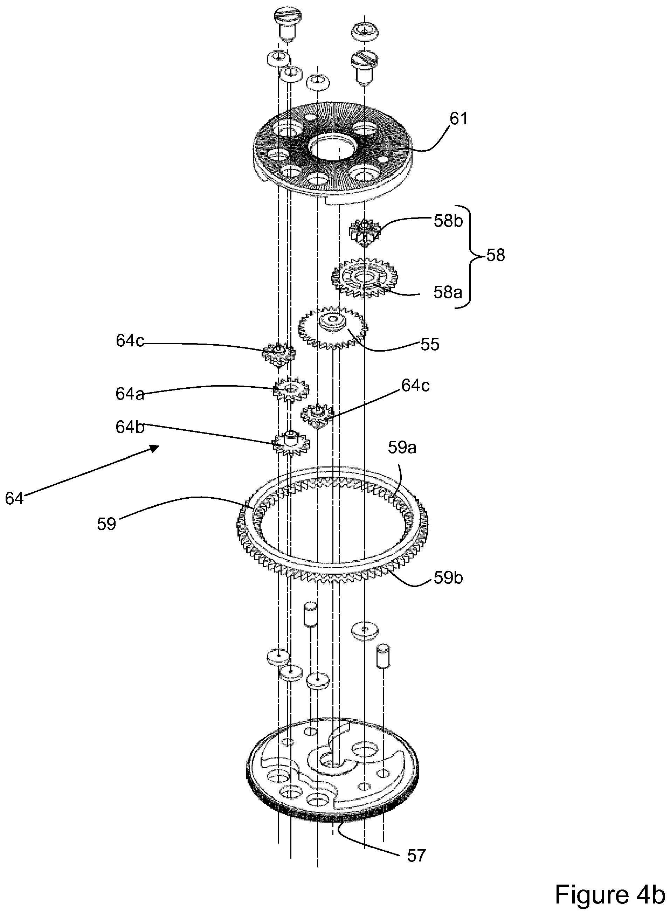

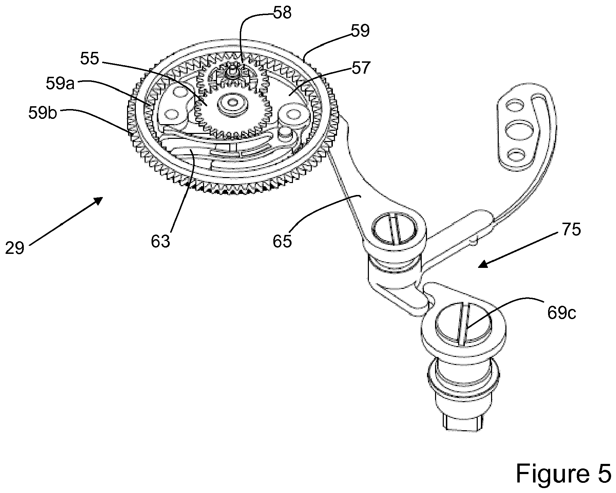

Le mécanisme inverseur 29 est illustré en vue éclatée sur la figure 4 et en vue assemblée sans couvercle 61 sur la figure 5, et dans le mode de réalisation illustré il comprend un engrenage planétaire, dont une entrée est en liaison cinématique avec le rouage de finissage (non illustré), et la sortie engrène avec le mobile d'embrayage 51. Une seconde entrée peut être freinée ou libérée afin de déterminer si le rapport d'engrenage du mécanisme inverseur 29 est positif (sens de rotation normal) ou négatif (sens de rotation inverse), comme on le comprendra plus clairement par la suite.

Le mécanisme inverseur 29 comprend un pignon solaire 55 qui est situé en dessus (par rapport aux vues des figures 4 et 5) d'un porte-satellite 57. Le pignon solaire 55 fait office de première entrée et est en liaison cinématique avec le rouage de finissage, par exemple en étant solidaire en rotation du mobile de secondes de ce dernier. Le pignon solaire 55 engrène avec un mobile satellite 58 à double pignon 58a, 58b, qui est libre en rotation par rapport au porte-satellite et engrène avec une denture intérieure 59a que comporte une couronne 59. Naturellement, plusieurs mobiles satellites 58 peuvent être prévus, ou le mobile satellite peut ne comporter qu'un seul pignon.

La couronne 59 présente également une denture extérieure 59b, qui engrène avec le mobile d'embrayage 51 et sert donc de sortie. La couronne 59, le pignon solaire 55 ainsi que le pignon satellite 58 sont maintenus en place par rapport au porte-satellite 57 par un couvercle 61, qui maintient ces composants en sandwich, tout en laissant la couronne 59 libre en rotation par rapport au porte-satellite 57.

Le porte-satellite 57 porte également un cliquet 63, qui fait office d'accouplement à couple limité entre le porte-satellite 57 et la denture intérieure 59a de la couronne 59. Alternativement, une friction pourrait également remplir cette fonction.

Les figures 4a et 4b illustrent une variante d'un mécanisme inverseur 29, qui peut être substitué par celui de la figure 4. Ce mécanisme inverseur 29 diffère de celui de la figure 4 en ce que le cliquet 63 a été remplacé par un engrenage unidirectionnel 64, les éléments formant ce dernier étant pivotés sur le porte-satellite 57. Cet engrenage unidirectionnel 64 comporte un mobile à deux niveaux comprenant un pignon 64b qui engrène exclusivement avec la denture intérieure 59a de la couronne 59 et est solidaire en rotation d'une roue 64a. La roue 64a se situe à un niveau supérieur, hors de la portée de la denture intérieure 59a, et engrène avec une paire d'autres roues 64c qui engrènent exclusivement avec la roue 64a. Il est à noter qu'il est possible de supprimer l'une des roues 64c sans nuire au fonctionnement de l'engrenage différentiel 64. La forme des dents des roues 64a et 64c est agencé de telle sorte que la roue 64a, et par conséquent également le pignon 64b, puisse tourner dans le sens horaire selon les vues des figures 4a et 4b, mais ne peut pas tourner dans le sens inverse. Ce genre d'engrenage unidirectionnel ainsi que les formes de dentures appropriées pour de tels engrenages sont bien connus et ne doivent pas être décrits en détails ici. Génériquement, l'engrenage unidirectionnel 64 relie le porte-satellite 57 à la couronne 59 et permet une rotation relative de la couronne 59 par rapport au porte-satellite 57 dans un sens, et de l'interdire dans l'autre sens.

Comme visible sur la figure 5, un frein 65 est prévu, qui peut rentrer en contact avec le pourtour du porte-satellite 57 d'un mécanisme inverseur 29 selon la figure 4, afin que le porte-satellite agisse en tant que seconde entrée de l'engrenage planétaire. Si le frein 65 est éloigné du porte-satellite 57, le cliquet 63 rend ce dernier solidaire en rotation avec la couronne 59, et un tour du pignon solaire 55 se traduit en un tour de la couronne 59 dans le même sens, le mobile satellite 58 ne tournant pas autour de lui-même et servant donc de lien rigide entre le pignon solaire 55 et la couronne 59.

Par contre, si le frein 65 est en contact avec le pourtour du porte-satellite 57, ce dernier est immobilisé, la force de rétention du cliquet 63 est surmontée, et le mobile satellite 58 tourne autour de lui-même pour transmettre la rotation du pignon solaire 55 à la denture intérieure 59a de la couronne 59. Cette dernière tourne par conséquent en sens inverse puisque le mobile satellite 58 agit en tant que mobile inverseur. Les rapports d'engrenage sont choisis afin que, dans cet état de fonctionnement, un tour du pignon solaire 55 se traduise en un tour de la couronne 59 dans l'autre sens.

Dans le cas de l'utilisation d'un mécanisme inverseur 29 selon les figures 4a et 4b, son fonctionnement est comme suit. Le pignon solaire 55 tourne dans le sens antihoraire. Lorsque le porte-satellites 57 n'est pas bloqué, l'engrenage unidirectionnel 64 empêche la couronne 59 de tourner par rapport au porte-satellites 57 dans le sens antihoraire puisque le pignon 64b est empêché de tourner dans le sens antihoraire par l'interaction entre les roues 64a, 64c comme décrit ci-dessus. La couronne 59 est donc rendue solidaire en rotation du porte-satellites 57 et du pignon solaire 55, le tout tournant ensemble dans le sens antihoraire. Par contre, lorsque le porte-satellites 57 est bloqué, la couronne 59 peut tourner librement dans le sens horaire par rapport au porte-satellites 57, car l'engrenage unidirectionnel 64 n'empêche pas une rotation relative dans ce sens. Parce que cette variante ne comporte pas d'accouplement à couple limité, les frottements et les pertes d'énergie sont réduits par rapport à la variante de la figure 4.

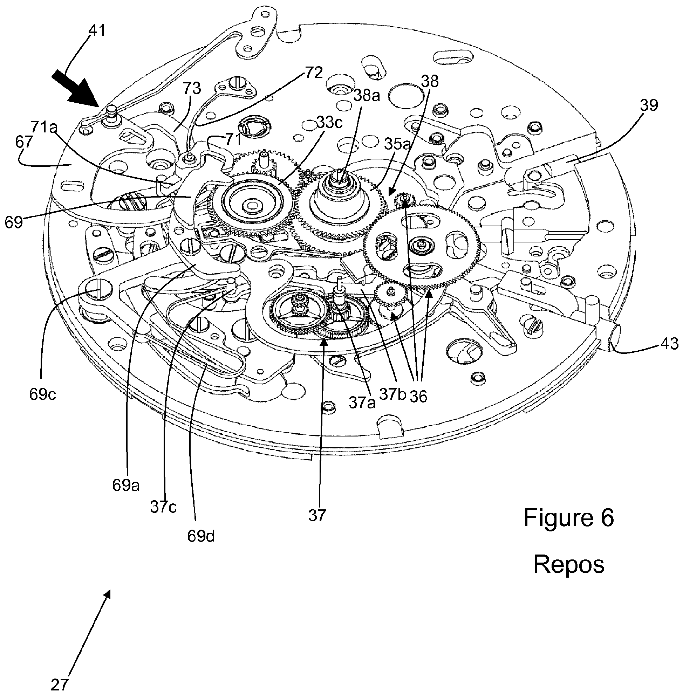

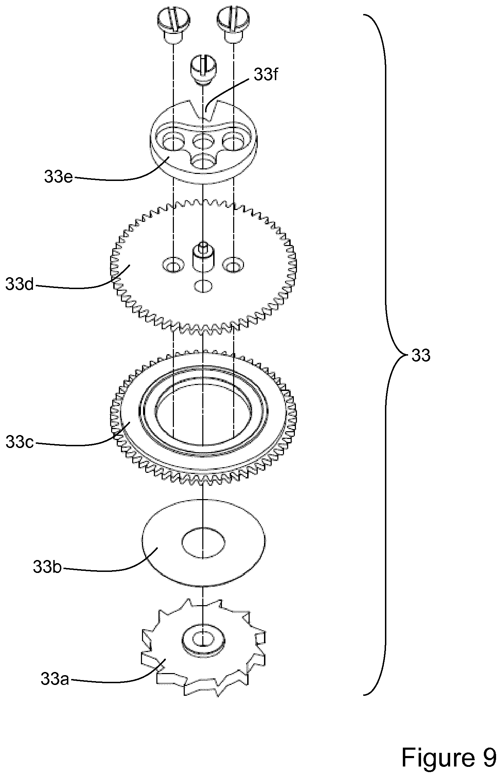

Les figures 6 à 8 illustrent le mécanisme côté cadran à l'état de repos, divers éléments n'ayant pas été représentés sur chaque figure afin de mieux montrer les éléments pertinents, et la figure 9 illustre en vue éclatée le mobile de compte à rebours 33.

Une roue 38 coaxiale et liée par une friction à la chaussée 38a dont est solidaire l'aiguille des minutes 5 de l'heure se trouve sur le côté cadran du mécanisme, qui entraîne le dispositif d'affichage de minutes et d'heures de chronographe 37 de façon conventionnelle, par l'intermédiaire d'un rouage de transmission 36. Le mobile de minutes de chronographe 37a est associé à un frein 37b, afin de bloquer toute rotation du dispositif d'affichage de minutes et d'heures de chronographe 37 lorsque le mécanisme est en mode de compte à rebours. Ce frein 37b fait partie d'une bascule qui est maintenue dans son état freiné par un élément de rappel quelconque. La bascule comporte également une goupille 37c, agencée pour être actionnée par la queue 69a du palpeur 69 à l'encontre du ressort de rappel 69d, comme on l'expliquera par la suite.

Une roue 35a dont est solidaire l'aiguille des minutes de compte à rebours 13 est entraînée par le mobile de compte à rebours 33 par l'intermédiaire d'une roue à friction 33c. Les autres éléments du mobile de compte à rebours 33 étant cinématiquement en aval de la roue à friction 33c, ils peuvent être bloqués sans que la roue à friction 33c soit également bloquée.

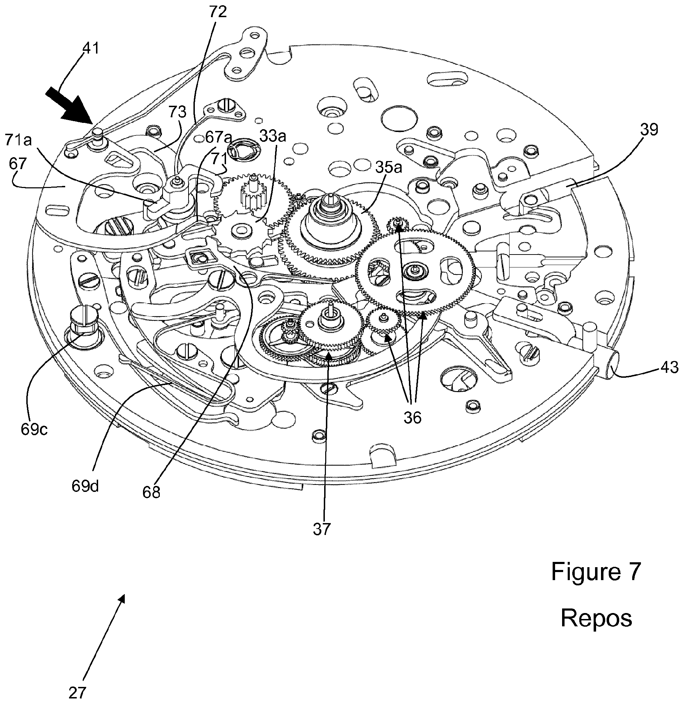

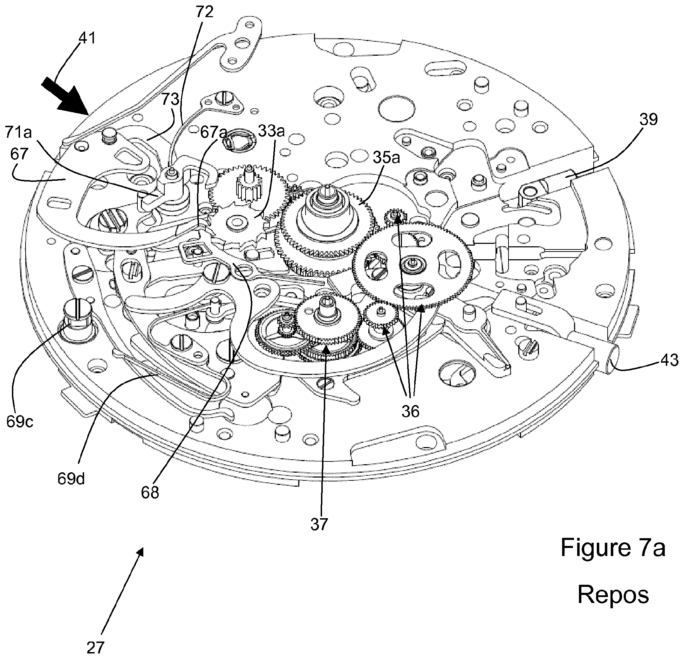

Le niveau du mobile de compte à rebours 33 le plus proche du bâti comporte une étoile 33a à 12 dents, qui est positionnée par un sautoir et est entraînée par un bec 67a porté par une bascule 67 ; cette bascule constitue donc un mécanisme de commande de compte à rebours. Cette bascule est commandée par le deuxième organe de commande 41 (représenté schématiquement par la flèche) afin que, suite à une pression sur le deuxième organe de commande 41, le bec pénètre dans la denture de l'étoile 33a et l'entraîne d'un pas afin de déterminer le nombre de minutes à décompter. Cette situation, lorsque le deuxième organe de commande 41 est complètement enfoncé, est illustrée sur la figure 7a. L'étoile 33a est solidaire en rotation d'une roue 33d qui est en liaison cinématique avec l'aiguille de compte à rebours 13, qui est donc entraînée par pas à chaque pression sur le deuxième organe de commande 41. Par ailleurs, un clinquant 33b est prévue entre l'étoile 33a et la roue à friction 33c et fait office de friction entre ces deux pièces.

Le mobile de compte à rebours 33 comprend également une came de compte à rebours 33e, solidaire en rotation avec l'étoile 33a et la roue 33d, qui comporte une encoche 33f et qui coopère avec un palpeur 69.

A l'état de repos, le palpeur 69 est maintenu hors de contact de la came de compte à rebours 33e par un crochet 71 qui est solidaire en rotation d'un bloqueur 73 pivoté sur le bâti. Ce bloqueur 73 bloque le fonctionnement du deuxième organe de commande 41 lorsque le mécanisme de chronographe 20 n'est pas à l'état « arrêté et remis à zéro ». Un ressort de bloqueur 72 tend à pivoter l'ensemble crochet 71 - bloqueur 73 dans le sens horaire (considéré côté cadran).

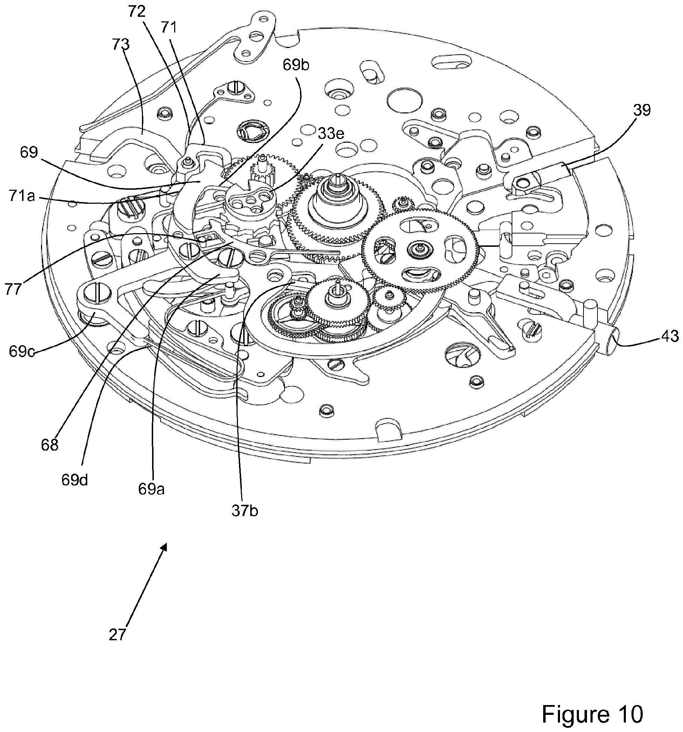

La figure 10 illustre le mécanisme lorsque le mobile de compte à rebours 33 a été mis préalablement dans une position angulaire correspondant à une indication de 11 minutes à décompter, et lorsque le premier organe de commande est enfoncé afin de démarrer le mécanisme en mode de compte à rebours. Dans cet état, l'ensemble bloqueur 73 - crochet 71 a été pivoté dans le sens antihoraire afin de bloquer le deuxième organe de commande 41, et de libérer le palpeur 69. Le bec 69b du palpeur rentre donc en contact avec la surface circulaire de la came de compte à rebours 33e sous l'effet de son ressort de rappel 69d. En même temps, l'embrayage 31 est embrayé de manière conventionnelle.

Le palpeur 69 est en liaison cinématique avec le frein 65 du mécanisme inverseur 29 afin de le commander en fonction de la position angulaire du palpeur 69 (voir également les figures 3 et 5). À cette fin, l'axe de rotation 69c du palpeur 69 traverse le bâti et coopère avec ledit frein 65 par l'intermédiaire d'une série de bascules 75, se composant de deux bascules. Lorsque le palpeur 69 se trouve dans la position illustrée à la figure 10, ledit frein 65 est en contact avec le porte-satellite 57 du mécanisme inverseur 29, qui est donc agencé pour entraîner l'embrayage en sens inverse.

La queue 69a du palpeur 69 restant hors de contact de la goupille 37c du frein du dispositif d'affichage de minutes et d'heures de chronographe 37, le dispositif d'affichage de minutes et d'heures de chronographe 37 reste bloqué.

Finalement, le sautoir 68 est éloigné de la denture de l'étoile 33a par une goupille 77 menée par un système marche-arrêt 79 associé au premier organe de commande 39 afin de permettre au mobile de compte à rebours 33 ainsi que l'aiguille 13 correspondante de tourner de manière uniforme.

Le mécanisme démarre donc en mode de compte à rebours comme décrit ci-dessus, et le mobile de secondes de chronographe 35 tourne en sens inverse, ce qui entraîne également le mobile de compte à rebours 33 par l'intermédiaire de la roue à friction 33c.

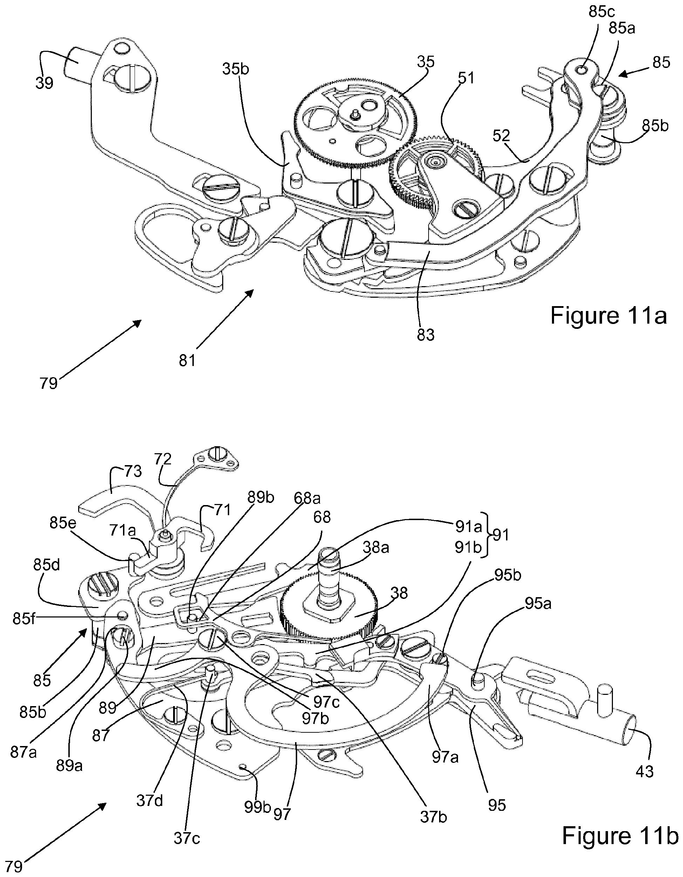

Pour mieux comprendre la séquence de mouvements qui vient d'être décrite, les figures 11a et 11b illustrent à l'état de repos, un système marche-arrêt 79 côté fond et côté cadran respectivement, et ses interactions avec d'autres composants du mécanisme.

Côté fond, le premier organe de commande 39 est en liaison cinématique avec un système de navettes 81 (ou alternativement une roue à colonnes), dont la géométrie précise peut être choisie selon les besoins de l'horloger et ne doit donc pas être décrite en détails. Le système de navettes 81 commande non seulement la position du mobile d'embrayage 51, le frein 35b du mobile de secondes de chronographe 35 ainsi que le marteau 35c correspondant (voir la figure 3) de manière connue, mais aussi la position d'une bascule de commande 83. Cette dernière est reliée par l'intermédiaire d'une goupille 85c à une manivelle 85 se composant d'une bascule 85a solidaire en rotation d'un axe 85b. Cet axe 85b sert à transmettre un pivotement à travers le bâti vers le côté cadran afin de commander des composants se trouvant sur le côté cadran.

Côté cadran, l'axe 85b porte une planche 85d présentant deux goupilles excentriques 85e, 85f, l'une 85e étant agencée pour faire pivoter l'ensemble crochet 71 - bloqueur 73 afin de libérer le palpeur 69 (non illustré sur les figures 11a et 11b) et de bloquer le deuxième organe de commande 41 comme décrit ci-dessus. L'autre goupille 85f commande une bascule 87, qui fait coulisser une pièce coulissante 89 par l'intermédiaire d'un plot 89a qui prend place dans une fente 87a que comporte la bascule 87. La pièce coulissante 89 comprend également une goupille 89b qui prend place dans une ouverture 68a que comporte le sautoir 68. Par ailleurs, la pièce coulissante 89 peut également coopérer avec une pince 91, composée d'un premier bras 91a et d'un deuxième bras 91b, que comporte le mécanisme de chronographe et qui sert à freiner la roue 38 afin que le dispositif d'affichage de minutes et d'heures de chronographe 37 ne soit plus entraîné lorsque le mécanisme de chronographe est à l'arrêt

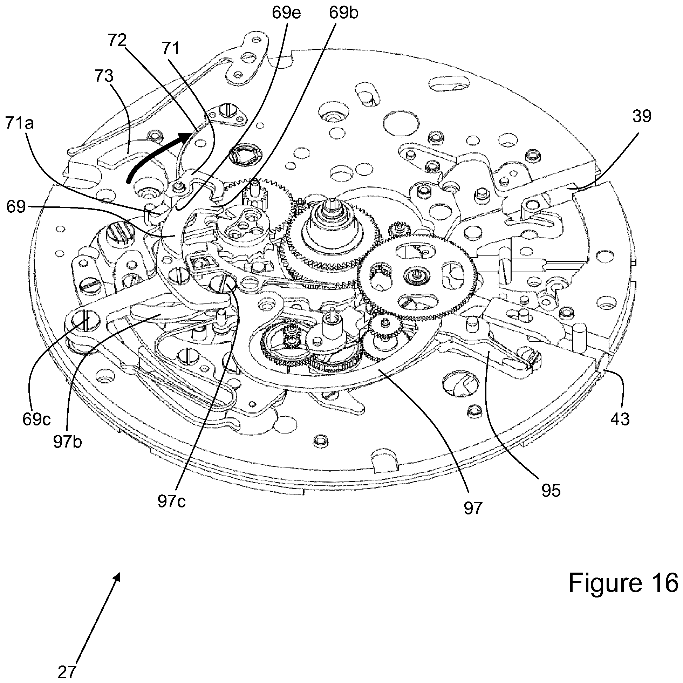

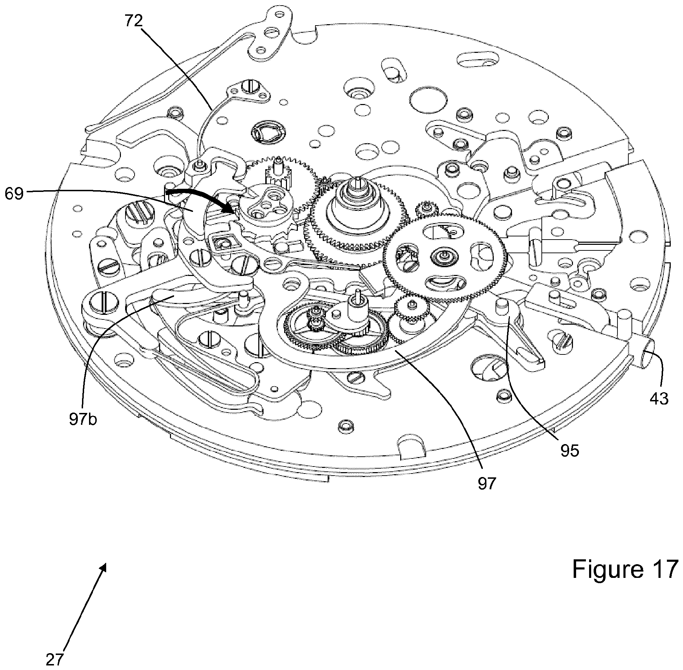

Les bascules 95, 97 sont associées au troisième organe de commande 43 de remise à zéro, et seront décrites plus en détails ci-dessous, en lien avec les figures 16 et 17. Les autres composants illustrés sur les figures 11a et 11b n'interagissant pas avec la fonctionnalité innovatrice du mécanisme de chronographe 27, ils ne seront pas décrits.

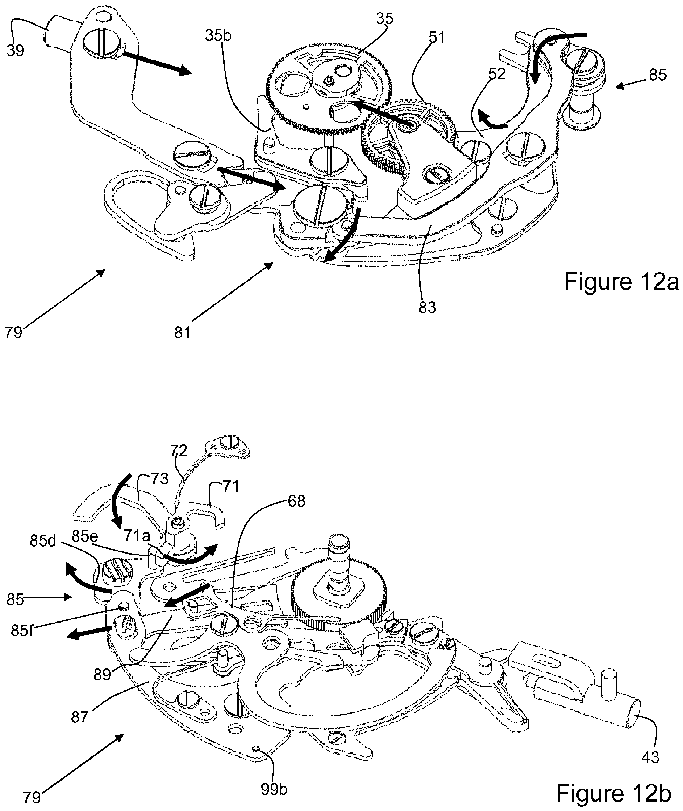

Les figures 12a et 12b illustrent le système marche-arrêt 79 suite à une première pression sur le premier organe de commande 39 afin de mettre le mécanisme de chronographe 27 en marche. Dans ces figures, les flèches épaisses indiquent les mouvements des composants principaux par rapport aux positions illustrées dans les figures 11a et 11b.

Le premier organe de commande 39 est enfoncé, ce qui commande le système de navettes 81 afin de faire pivoter la bascule d'embrayage 52 et de faire engrener le mobile d'embrayage 51 avec le mobile de secondes de chronographe 35, qui est donc entraîné selon un sens de rotation déterminé par la position du palpeur 69. Le système de navettes 81 commande également la bascule de commande 83 afin de faire pivoter la manivelle 85 dans le sens antihoraire (considéré du côté fond).

Côté cadran, la manivelle 85 ayant pivoté dans le sens horaire (considéré du côté cadran), la goupille 85e de la planche 85d bute contre la queue 71a du crochet 71 afin de faire pivoter l'ensemble crochet 71 - bloqueur 73 dans le sens antihoraire, et afin de libérer le palpeur 69 et de bloquer le deuxième organe de commande. La goupille 85f fait pivoter la bascule 87 dans le sens antihoraire, ce qui entraîne un déplacement de la pièce coulissante 89, qui soulève le cliquet 68, et libère donc l'étoile 33a. Le mécanisme de chronographe 27 est donc mis en marche.

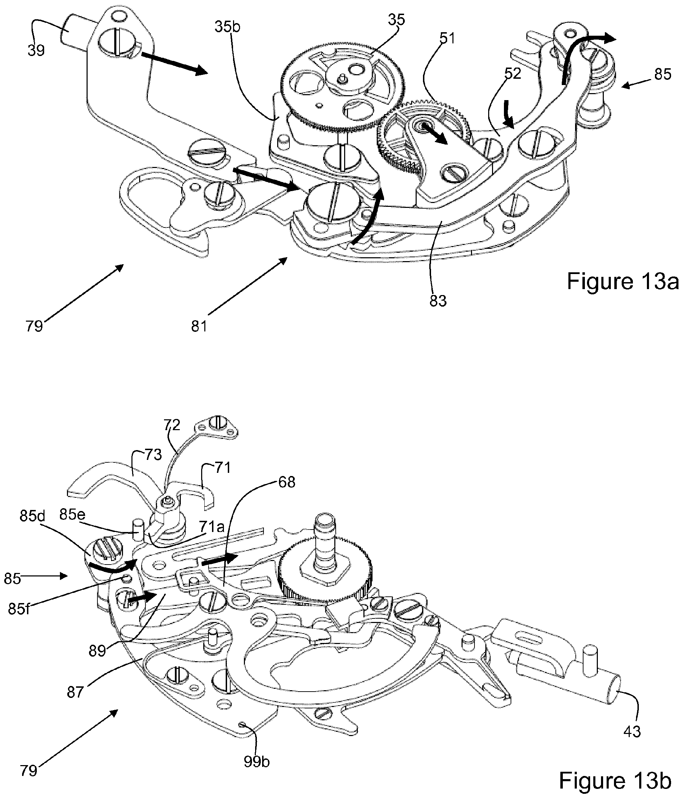

Les figures 13a et 13b illustrent le système marche-arrêt 79 suite à une deuxième pression sur le premier organe de commande 39 afin d'arrêter le mécanisme de chronographe 27. Les flèches épaisses indiquent les mouvements des composants principaux par rapport aux positions illustrées dans les figures 12a et 12b.

Côté fond, le premier organe de commande 39 est enfoncé à nouveau, ce qui commande le système de navettes 81 et entraîne le pivotement de la bascule d'embrayage 52 afin d'éloigner le mobile d'embrayage 51 de la denture du mobile de secondes de chronographe 35 de manière connue. Cela fait arrêter le mécanisme de chronographe 27. Simultanément, le système de navettes 81 commande également la bascule de commande 83 afin de faire pivoter la manivelle 85 dans le sens horaire (considérée du côté fond).

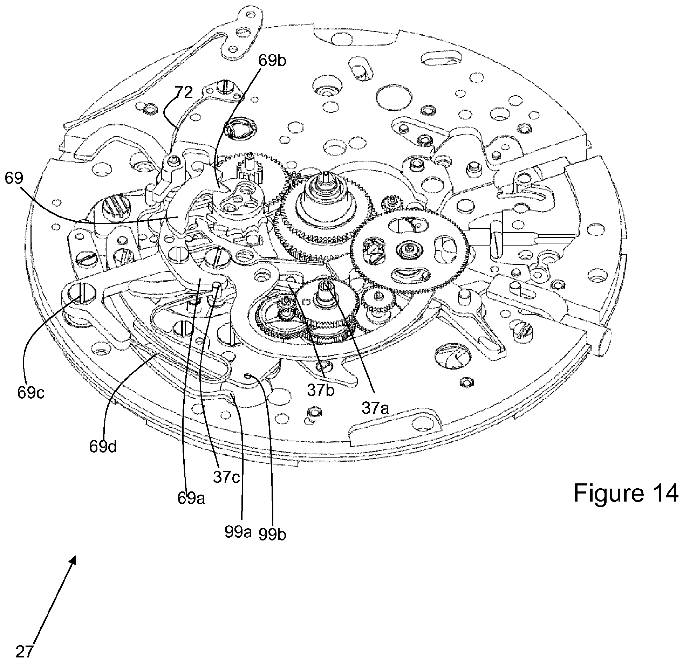

Côté cadran, la manivelle 85 ayant pivoté dans le sens antihoraire (considérée du côté cadran), la goupille 85e de la planche 85d s'éloigne de la queue 71a du crochet 71, qui pivote légèrement dans le sens horaire jusqu'à ce que le crochet 71 soit en contact avec la face extrême du palpeur 69. Par conséquent, le palpeur 69 reste libre de tomber dans l'encoche 33f de la came de compte à rebours 33e, et le deuxième organe de commande 41 reste bloqué. Un sautoir 99a (voir la figure 14), qui devrait être illustré comme étant accroché derrière une goupille 99b prévue sur la bascule 87 fait pivoter cette bascule 87 dans le sens horaire, ce qui entraîne un déplacement de la pièce coulissante 89 en direction du centre du mouvement. Le cliquet 68 est relâché et l'étoile 33a positionnée. Le mécanisme de chronographe 27 est donc mis à l'arrêt. Si l'utilisateur arrête le mécanisme avant la fin du compte à rebours, l'aiguille des minutes compte à rebours se positionne en face de la minute entière la plus proche grâce au fait que le cliquet 68 repositionne l'étoile 33a.

La figure 14 illustre la situation côté cadran lorsque le mécanisme de chronographe est en marche et le bec du palpeur 69b est tombé dans l'encoche 33f de la came de compte à rebours 33e. Cette situation se présente en mode de chronographe conventionnel, indépendamment de si l'utilisateur l'a déclenché manuellement, ou s'il se déclenche automatiquement à la fin de de la phase de compte à rebours.

Les différences visibles côté cadran entre l'état du mécanisme illustré sur la figure 14 et celui reproduit sur la figure 10 sont les suivants. En premier lieu, le bec 69b du palpeur 69 est tombé dans l'encoche 33f de la came de compte à rebours 33e sous l'effet du ressort de rappel 69d du palpeur 69. Par conséquent, le palpeur 69 a pivoté dans le sens horaire, pivotant ainsi son axe 69c, qui, par l'intermédiaire de la série de bascules 75 situées côté cadran (voir la figure 3) fait écarter le frein 65 du porte-satellite 57 du mécanisme inverseur 29, ce qui entraîne ainsi le mobile d'embrayage 51 dans son sens normal, entraînant donc le mobile de secondes de chronographe 35 et l'aiguille 7 correspondant dans leur sens de rotation normal. La roue à friction 33c continue d'être entraînée en rotation par le mobile de secondes de chronographe 35, qui n'entraîne plus les autres composants du mobile de compte à rebours 33, car ces derniers sont bloqués par le bec 69b qui se trouve dans l'encoche 33f de la came 33e.

En même temps, la queue 69a de la bascule 69 bute contre la goupille 37c qui soulève le frein 37b, débloquant ainsi le mobile de minutes de chronographe 37a. Le dispositif d'affichage de minutes et d'heures de chronographe 37 peut donc compter les minutes et les heures de manière conventionnelle.

Le mécanisme de chronographe 27 part donc en mode de chronographe conventionnel.

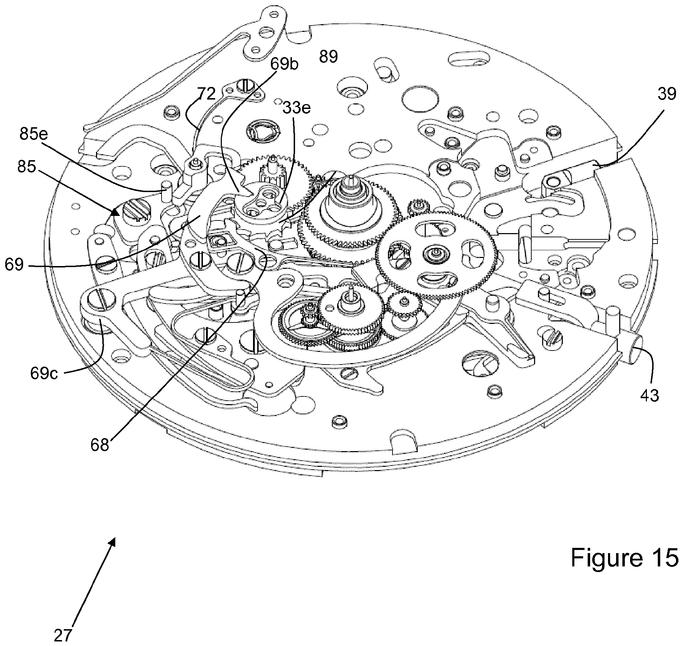

La figure 15 illustre l'état du mécanisme côté cadran lorsque le premier organe de commande 39 a été enfoncé et relâché, alors que le mécanisme 27 était préalablement en mode de chronographe conventionnel, comme illustré sur la figure 14.

Les divers composants adoptent les mêmes positions qu'illustrées sur la figure 14, sauf que le système marche-arrêt 79 se trouve dans l'état illustré sur les figures 13a et 13b. Par conséquent, la pièce coulissante 89 a été déplacée en direction du centre du mouvement, le sautoir 68 a été relâché afin de positionner à nouveau l'étoile 33a, et la goupille 85e s'éloigne de la queue 71a du crochet 71. Côté fond (non représenté), le mobile d'embrayage 51 est débrayé du mobile de secondes de chronographe 35, et le mécanisme de chronographe 27 est par conséquent à l'arrêt.

Si le mécanisme de chronographe 27 se trouvait par contre en mode de compte à rebours, les seules différences seraient que le palpeur 69 se trouverait en contact avec le pourtour circulaire de la came de compte à rebours 33e, que le frein 37b bloquerait le mobile de minutes de chronographe 37a et que, côté fond, le porte-satellite 57 de l'inverseur 29 serait freiné par son frein 65.

La figure 16 illustre l'état du mécanisme lorsque, à partir de l'état illustré sur la figure 15, le troisième organe de commande 43 de remise à zéro est enfoncé.

D'une part, le troisième organe de commande 43 fait actionner les marteaux de remise à zéro afin qu'ils puissent coopérer chacun avec un coeur de remise à zéro correspondant solidaires en rotation avec les diverses aiguilles de chronographe 7, 9, 11.

D'autre part, le troisième organe de commande 43 coopère avec un système de bascules 95, 97 qui le relie avec le palpeur 69, comme on peut aussi le voir sur la figure 11b. Le troisième organe de commande 43 fait pivoter la première de ces bascules 95 dans le sens antihoraire autour de son axe de rotation 95a. Un plot 95b s'appuie contre une première extrémité 97a de la deuxième de ces bascules 97, qui le fait pivoter dans le sens horaire autour de son axe de rotation 97c. L'autre extrémité 97b de cette bascule bute contre une partie du palpeur 69 afin de le faire pivoter dans le sens antihoraire autour de son axe de rotation 69c, le bec 69b du palpeur s'éloignant donc de la came 33e du mobile de compte à rebours 33. Côté fond, cette rotation est transmise au frein 65, qui rentre en contact avec le porte-satellite 57 du dispositif inverseur 29, de la manière mentionnée ci-dessus.

En même temps, l'action du ressort de bloqueur 72 fait pivoter l'ensemble crochet 71 - bloqueur 73 dans le sens horaire, débloquant ainsi le deuxième organe de commande 41. Par ailleurs, l'extrémité libre du crochet 71 se place dans le trajet de l'extrémité du palpeur 69. Aussi, la queue 69a du palpeur libère le frein 37b qui bloque le mobile de minutes de chronographe 37a.

La figure 17 illustre l'état du mécanisme lorsque l'utilisateur relâche le troisième organe de commande 43. Ce faisant, les bascules 75, 77 reprennent leurs positions initiales, et l'extrémité 97b de la bascule 97 relâche le palpeur 69, qui est empêché de tomber sur la came 33e du mobile de compte à rebours 33 par le crochet 71, qui le raccroche après un petit pivotement en direction de ladite came 33e. Le mécanisme est par conséquent à nouveau dans sa position de repos.

Il va sans dire que d'autres agencements sont possibles pour reprendre la même fonctionnalité, et l'invention ne se limite par conséquent pas à la cinématique exacte décrite ci-dessus. Par exemple, plusieurs cames pourraient être substituées par des excentriques, des jeux de bascules par d'autres genres de transmissions, etc.

## Revendications

1. Mouvement horloger (20) comprenant :
- une source d'énergie (21) et une base de temps (25) liée cinématiquement à ladite source d'énergie (21) par l'intermédiaire d'un rouage de finissage (23) ;
- un mécanisme de chronographe (27) en liaison cinématique sélective avec ledit rouage de finissage (23) par l'intermédiaire d'un mécanisme d'embrayage (31) commandé par un premier organe de commande (39) ;
dans lequel le mécanisme de chronographe (27) comprend
- un mobile de secondes de chronographe (35) susceptible d'être en liaison cinématique avec ledit mécanisme d'embrayage (31) et associé à un organe d'affichage de seconde de chronographe (7) ;
- un mobile de compte à rebours (33) destiné à être entraîné par le mobile de secondes de chronographe (35) et en liaison cinématique avec un organe d'affichage de compte à rebours (13) ;
- un mécanisme inverseur (29) comprenant au moins une première entrée (55) agencée pour être entraînée par le rouage de finissage (23) et une sortie (59) agencée pour entraîner le mobile de secondes de chronographe (35) en rotation, le mécanisme inverseur (29) ayant un premier état dans lequel il est agencé pour entraîner le mobile de secondes de chronographe (35) dans un sens normal et un second état dans lequel il est agencé pour entraîner le mobile de secondes de chronographe (35) dans un sens inverse ;
- un mécanisme de commande de compte à rebours (67) agencé pour positionner angulairement le mobile compte à rebours (33) suite à des actions d'un utilisateur sur un deuxième organe de commande (41) ;
**caractérisé en ce que** l'état du mécanisme inverseur est commandé automatiquement en fonction de la position angulaire du mobile compte à rebours (33), de telle sorte que le mécanisme inverseur (29) se trouve dans son premier état lorsque le mobile de compte à rebours (33) se trouve dans une position angulaire correspondant à une indication de compte à rebours de zéro, et que le mécanisme inverseur (29) se trouve dans son second état lorsque le mobile de compte à rebours (33) se trouve dans une autre position angulaire.

2. Mouvement (20) selon la revendication précédente, dans lequel le mobile de compte à rebours (33) comprend une came de compte à rebours (33e) agencée pour déterminer l'état du mécanisme inverseur (29).

3. Mouvement (20) selon la revendication 2, dans lequel le mobile de compte à rebours (33) comprend en outre une étoile (33a) présentant un nombre de dents supérieur au nombre de minutes maximum à décompter, l'étoile (33) étant solidaire en rotation avec la came de compte à rebours (33e) et étant positionnée par un sautoir (68).

4. Mouvement (20) selon l'une des revendications 2 et 3, comprenant en outre un palpeur (69) destiné à rentrer en contact avec la came de compte à rebours (33e) et étant en liaison cinématique avec le mécanisme inverseur (29) afin de déterminer son état.

5. Mouvement (20) selon la revendication 4, comprenant en outre un crochet pivotant (71) agencé pour maintenir le palpeur (69) hors de contact de la came de compte à rebours (33e).

6. Mouvement (20) selon l'une des revendications précédentes, comprenant en outre un bloqueur (73) agencé pour bloquer le deuxième organe de commande (41) lorsque le mécanisme de chronographe (27) est en marche ou arrêté sans avoir été remis à zéro.

7. Mouvement (20) selon les revendications 5 et 6, dans lequel le bloqueur (73) est solidaire en rotation du crochet (71).

8. Mouvement (20) selon la revendication 3, comprenant un système de marche-arrêt (79) agencé pour embrayer et débrayer le mécanisme d'embrayage (31) et pour dégager le cliquet (68) de la denture de l'étoile (33a) lorsque le mécanisme de chronographe (27) est en marche.

9. Mouvement (20) selon les revendications 5 et 8, dans lequel le système de marche-arrêt (79) est également agencé pour faire pivoter le crochet (71) afin de libérer le palpeur (69) lorsque le mécanisme de chronographe (27) est mis en marche.

10. Mouvement (20) selon la revendication 4, comprenant un système de bascules (95, 97) reliant un troisième organe de commande (43) de remise à zéro au palpeur (69) afin de pivoter ce palpeur hors de contact de la came de compte à rebours (33e) lors d'une pression sur le troisième organe de commande (43).

11. Mouvement (20) selon la revendication 10, dans lequel le palpeur (69) et le crochet (71) sont agencés de telle sorte que, lors de ladite pression sur le troisième organe de commande (43), un ressort (72) coopérant avec le crochet (71) le fait pivoter pour qu'il raccroche le palpeur (69) à nouveau lorsque ladite pression est relâchée.

12. Mouvement (20) selon l'une des revendications 1 à 11, dans lequel le mécanisme inverseur (29) comprend un engrenage planétaire (55, 57, 58, 59), comportant ladite première entrée (55), ladite sortie (59) et une seconde entrée (57) agencée pour coopérer avec ledit mobile de compte à rebours (33), ladite seconde entrée (57) étant reliée à ladite sortie (59) par l'intermédiaire d'un accouplement à couple limité (63) ou par l'intermédiaire d'un engrenage unidirectionnel (64).

13. Mouvement (20) selon les revendications 4 et 12, dans lequel ladite première entrée est un pignon solaire (55) destiné à être entraîné en rotation par le rouage de finissage (23), ladite deuxième entrée est un porte-satellite (57) portant un mobile satellite (58) qui engrène à la fois avec le pignon solaire (55) et un mobile de sortie (59), le porte-satellite (57) formant ladite deuxième entrée et étant agencé pour être freiné par un frein (65) en liaison cinématique avec le palpeur (69) afin de déterminer ledit état du mécanisme inverseur (29).

14. Mouvement (20) selon l'une des revendications précédentes, dans lequel le mobile de compte à rebours (33) est en liaison cinématique avec le mobile de secondes de chronographe (35) par l'intermédiaire d'un entraînement à friction (33c).

15. Mouvement (20) selon la revendication 4, comprenant en outre un dispositif d'affichage de minutes et d'heures de chronographe (9, 11), ce dernier étant agencé pour être bloqué par un frein (37b) commandé par le palpeur.

## Patentansprüche

1. Uhrwerk (20), umfassend:
- eine Energiequelle (21) und eine Zeitbasis (25), die mittels eines Finissage-Räderwerks (23) kinematisch mit der Energiequelle (21) verbunden ist;
- einen Chronograph-Mechanismus (27) in selektiver kinematischer Verbindung mit dem Finissage-Räderwerk (23) mittels eines von einem ersten Steuerorgan (39) gesteuerten Kupplungsmechanismus (31);
wobei der Chronograph-Mechanismus (27) umfasst
- ein Chronograph-Sekunden-Drehteil (35), das mit dem Kupplungsmechanismus (31) in kinematischer Verbindung sein kann und einem Chronograph-Sekundenanzeigeorgan (7) zugeordnet ist;
- ein Countdown-Drehteil (33), das dazu bestimmt ist, vom Chronograph-Sekunden-Drehteil (35) angetrieben zu werden und in kinematischer Verbindung mit einem Countdown-Anzeigeorgan (13) steht;
- einen Umkehrmechanismus (29), der mindestens einen ersten Eingang (55), der eingerichtet ist, um vom Finissage-Räderwerk (23) angetrieben zu werden, und einen Ausgang (59) umfasst, der eingerichtet ist, um das Chronograph-Sekunden-Drehteil (35) in Drehung zu versetzen, wobei der Umkehrmechanismus (29) einen ersten Zustand, in dem er eingerichtet ist, um das Chronograph-Sekunden-Drehteil (35) in einer normalen Richtung anzutreiben, und einen zweiten Zustand hat, in dem er eingerichtet ist, um den Chronograph-Sekunden-Drehteil (35) in einer umgekehrten Richtung anzutreiben;
- einen Countdown-Steuermechanismus (67), der eingerichtet ist, um das Countdown-Drehteil (33) nach Einwirkungen eines Benutzers auf ein zweites Steuerorgan (41) winkelmäßig zu positionieren;
**dadurch gekennzeichnet, dass** der Zustand des Umkehrmechanismus abhängig von der Winkelstellung des Countdown-Drehteils (33) automatisch gesteuert wird, so dass der Umkehrmechanismus (29) sich in seinem ersten Zustand befindet, wenn das Countdown-Drehteil (33) sich in einer Winkelstellung befindet, die einer Anzeige eines Countdowns von Null entspricht, und dass der Umkehrmechanismus (29) sich in seinem zweiten Zustand befindet, wenn das Countdown-Drehteil (33) sich in einer anderen Winkelstellung befindet.

2. Uhrwerk (20) nach dem vorhergehenden Anspruch, wobei das Countdown-Drehteil (33) eine Countdown-Kurvenscheibe (33e) umfasst, der eingerichtet ist, um den Zustand des Umkehrmechanismus (29) zu bestimmen.

3. Uhrwerk (20) nach Anspruch 2, wobei das Countdown-Drehteil (33) außerdem einen Stern (33a) umfasst, der eine Anzahl von Zähnen größer als die rückwärts zu zählende maximale Anzahl von Minuten aufweist, wobei der Stern (33) drehfest mit der Countdown-Kurvenscheibe (33e) verbunden ist und durch eine Hebelfeder (68) positioniert wird.

4. Uhrwerk (20) nach einem der Ansprüche 2 und 3, das außerdem einen Taster (69) umfasst, der dazu bestimmt ist, mit der Countdown-Kurvenscheibe (33e) in Kontakt zu kommen, und mit dem Umkehrmechanismus (29) in kinematischer Verbindung steht, um seinen Zustand zu bestimmen.

5. Uhrwerk (20) nach Anspruch 4, das außerdem einen Schwenkhaken (71) umfasst, der eingerichtet ist, um den Taster (69) außer Kontakt mit der Countdown-Kurvenscheibe (33e) zu halten.

6. Uhrwerk (20) nach einem der vorhergehenden Ansprüche, das außerdem ein Blockierorgan (73) umfasst, das eingerichtet ist, um das zweite Steuerorgan (41) zu blockieren, wenn der Chronograph-Mechanismus (27) läuft oder ausgeschaltet ist, ohne auf Null zurückgestellt worden zu sein.

7. Uhrwerk (20) nach den Ansprüchen 5 und 6, wobei das Blockierorgan (73) drehfest mit dem Haken (71) verbunden ist.

8. Uhrwerk (20) nach Anspruch 3, das ein Ein-Aus-System (79) umfasst, das eingerichtet ist, um den Kupplungsmechanismus (31) ein- und auszukuppeln und um den Sperrkegel (68) von der Zahnung des Sterns (33a) zu lösen, wenn der Chronograph-Mechanismus (27) eingeschaltet ist.

9. Uhrwerk (20) nach den Ansprüchen 5 und 8, wobei das Ein-Aus-System (79) ebenfalls eingerichtet ist, um den Haken (71) zu schwenken, um den Taster (69) freizugeben, wenn der Chronograph-Mechanismus (27) eingeschaltet wird.

10. Uhrwerk (20) nach Anspruch 4, das ein System von Wippen (95, 97) umfasst, die ein drittes Nullrückstellungs-Steuerorgan (43) mit dem Taster (69) verbinden, um diesen Taster bei einem Druck auf das dritte Steuerorgan (43) aus dem Kontakt mit der Countdown-Kurvenscheibe (33e) zu schwenken.

11. Uhrwerk (20) nach Anspruch 10, wobei der Taster (69) und der Haken (71) so eingerichtet sind, dass bei dem Druck auf das dritte Steuerorgan (43) eine mit dem Haken (71) zusammenwirkende Feder (72) ihn schwenkt, damit er den Taster (69) erneut einhängt, wenn der Druck gelöst wird.

12. Uhrwerk (20) nach einem der Ansprüche 1 bis 11, wobei der Umkehrmechanismus (29) ein Planetengetriebe (55, 57, 58, 59) umfasst, das den ersten Eingang (55), den Ausgang (59) und einen zweiten Eingang (57) aufweist, der eingerichtet ist, um mit dem Countdown-Drehteil (33) zusammenzuwirken, wobei der zweite Eingang (57) mit dem Ausgang (59) mittels einer Kopplung mit begrenztem Drehmoment (63) oder mittels eines unidirektionalen Zahnrads (64) verbunden ist.

13. Uhrwerk (20) nach den Ansprüchen 4 und 12, wobei der erste Eingang ein Sonnenrad (55) ist, das dazu bestimmt ist, vom Finissage-Räderwerk (23) in Drehung versetzt zu werden, der zweite Eingang ein Satellitenträger (57) ist, der ein Satelliten-Drehteil (58) trägt, das sowohl in das Sonnenrad (55) als auch in ein Ausgangs-Drehteil (59) eingreift, wobei der Satellitenträger (57) den zweiten Eingang bildet und eingerichtet ist, um von einer Bremse (65) in kinematischer Verbindung mit dem Taster (69) gebremst zu werden, um den Zustand des Umkehrmechanismus (29) zu bestimmen.

14. Uhrwerk (20) nach einem der vorhergehenden Ansprüche, wobei das Countdown-Drehteil (33) mittels eines Reibungsantriebs (33c) mit dem Chronograph-Sekunden-Drehteil (35) in kinematischer Verbindung ist.

15. Uhrwerk (20) nach Anspruch 4, das außerdem eine Chronograph-Minuten- und Stundenanzeigevorrichtung (9, 11) umfasst, wobei letztere eingerichtet ist, um von einer vom Taster gesteuerten Bremse (37b) blockiert zu werden.

## Claims

1. Timepiece movement (20) comprising:
- a source of energy (21) and a time base (25) kinematically linked to said source of energy (21) by means of a going train (23);
- a chronograph mechanism (27) selectively kinematically linked to said going train (23) by means of a coupling mechanism (31) controlled by a first control organ (39);
in which the chronograph mechanism (27) comprises
- a chronograph seconds wheel (35) with the ability to be kinematically linked to said coupling mechanism (31) and associated with a chronograph seconds display organ (7);
- a countdown timer wheel (33) intended to be driven by the chronograph seconds wheel (35) and kinematically linked to a countdown timer display organ (13);
- a reversing mechanism (29) comprising at least one first input (55) arranged so as to be driven by the going train (23) and an output (59) arranged so as to drive the chronograph seconds wheel (35) in rotation, the reversing mechanism (29) having a first state, in which it is arranged to drive the chronograph seconds wheel (35) in a normal direction, and a second state, in which it is arranged to drive the chronograph seconds wheel (35) in an inverse direction;
- a countdown timer control mechanism (67) arranged so as to position the countdown timer wheel (33) angularly as a result of actions by a user on a second control organ (41);
**characterized in that** the state of the reversing mechanism is controlled automatically in function of the angular position of the countdown timer wheel (33), in such a way that the reversing mechanism (29) is in its first state when the countdown timer wheel (33) is in an angular position corresponding to a countdown timer indication of zero, and **in that** the reversing mechanism (29) is in its second state when the countdown timer wheel (33) is in another angular position.

2. Movement (20) according to the preceding claim, in which the countdown timer wheel (33) comprises a countdown timer cam (33e) arranged to determine the state of the reversing mechanism (29).

3. Movement (20) according to claim 2, in which the countdown timer wheel (33) further comprises a starwheel (33a) exhibiting a number of teeth greater than the maximum number of minutes to be counted down, the starwheel (33) being rotationally integrated with the countdown timer cam (33e) and being positioned by a jumper (68).

4. Movement (20) according to one of claims 2 and 3, further comprising a feeler-spindle (69) intended to enter into contact with the countdown timer cam (33e) and being kinematically linked to the reversing mechanism (29) in order to determine its state.

5. Movement (20) according to claim 4, further comprising a pivoting hook (71) arranged so as to maintain the feeler-spindle (69) out of contact with the countdown timer cam (33e).

6. Movement (20) according to one of the preceding claims, further comprising a blocking member (73) arranged so as to block the second control organ (41) when the chronograph mechanism (27) is running or is stopped without having been reset to zero.

7. Movement (20) according to claims 5 and 6, in which the blocking member (73) is rotationally integrated with the hook (71).

8. Movement (20) according to claim 3, comprising a stop/start system (79) arranged so as to connect and disconnect the coupling mechanism (31) and as to disengage the pawl (68) from the toothing of the starwheel (33a) when the chronograph mechanism (27) is running.

9. Movement (20) according to claims 5 and 8, in which the stop/start system (79) is furthermore arranged so as to cause the hook (71) to pivot in order to release the feeler-spindle (69) when the chronograph mechanism (27) is started.

10. Movement (20) according to claim 4, comprising a system of levers (95, 97) connecting a third zero-setting control organ (43) to the feeler-spindle (69) in order to cause this feeler-spindle to pivot out of contact with the countdown counter cam (33e) when pressure is applied to the third control organ (43) .

11. Movement (20) according to claim 10, in which the feeler-spindle (69) and the hook (71) are arranged in such a way that, during said pressure on the third control organ (43), a spring (72) interacting with the hook (71) causes it to pivot in order for it to re-engage with the feeler-spindle (69) when said pressure is released.

12. Movement (20) according to one of claims 1 to 11, in which the reversing mechanism (29) comprises a planetary gear (55, 57, 58, 59), comprising said first input (55), said output (59) and a second input (57) arranged so as to interact with said countdown timer wheel (33), said second input (57) being connected to said output (59) by means of a limited-torque coupling (63) or by means of a unidirectional gearing (64).

13. Movement (20) according to claims 4 and 12, in which said first input is a sun gear (55) intended to be rotated by the going train (23), said second input is a planetary gear carrier (57) carrying a planetary wheel (58) which engages with both the sun gear (55) and with an output wheel (59), the planetary gear carrier (57) forming said second input and being arranged so as to be braked by a brake (65) kinematically linked to the feeler-spindle (69) in order to determine said state of the reversing mechanism (29).

14. Movement (20) according to one of the preceding claims, in which the countdown timer wheel (33) is kinematically linked to the chronograph seconds wheel (35) by means of a friction drive (33c).

15. Movement (20) according to claim 4, further comprising a device for displaying the chronograph minutes and hours (9, 11), the latter being arranged so as to be blocked by a brake (37b) controlled by the feeler-spindle.
